# EUROPÄISCHE PATENTSCHRIFT

(11) **EP 3 312 656 B1**
(45) Veröffentlichungstag und Bekanntmachung des Hinweises auf die Patenterteilung: **18.12.2019**
(21) Anmeldenummer: 16194512.6
(22) Anmeldetag: 19.10.2016
(51) Int. Cl.: G02B 21/00, G02B 26/10

(54) **VORRICHTUNG ZUM VERLAGERN EINES AUF EINER OPTISCHEN ACHSE EINFALLENDEN LICHTSTRAHLS**
DEVICE FOR RELOCATING A LIGHT BEAM IMPACTING AN OPTICAL AXIS
DISPOSITIF DE DÉPLACEMENT D'UN RAYON LUMINEUX INCIDENT SUR UN AXE OPTIQUE

(43) Veröffentlichungstag der Anmeldung: 25.04.2018
(73) Patentinhaber: Abberior Instruments GmbH, 37077 Göttingen (DE)
(72) Erfinder: Fischer, Joachim, 76131 Karlsruhe (DE); Henrich, Matthias, 69117 Heidelberg (DE); Reuss, Matthias, 37083 Göttingen (DE); Hoyer, Patrick, 37083 Göttingen (DE)
(74) Vertreter: REHBERG HÜPPE + PARTNER

(56) Entgegenhaltungen:
- US-A1- 2006 151 449
- US-A1- 2014 092 459

## Beschreibung

### TECHNISCHES GEBIET DER ERFINDUNG

Die Erfindung betrifft eine Vorrichtung zum Verlagern eines auf einer optischen Achse einfallenden Lichtstrahls, wobei die Vorrichtung vier Drehspiegel aufweist, die den Lichtstrahl nacheinander durch Reflektion an ihren Spiegelflächen ablenken.

Insbesondere betrifft die Erfindung eine solche Vorrichtung, bei der einer der vier Drehspiegel um eine parallel zu seiner Spiegelfläche und orthogonal zu der optischen Achse verlaufende erste Schwenkachse verschwenkbar ist, bei der ein anderer der vier Drehspiegel um eine parallel zu seiner Spiegelfläche und parallel zu der ersten Schwenkachse verlaufende zweite Schwenkachse verschwenkbar ist, bei der ein weiterer der vier Drehspiegel um eine parallel zu seiner Spiegelfläche verlaufende dritte Schwenkachse verschwenkbar ist und bei der ein übriger der vier Drehspiegel um eine parallel zu seiner Spiegelfläche verlaufende vierte Schwenkachse verschwenkbar ist, wobei die vierte Schwenkachse zusammen mit der dritten Schwenkachse in einer Ebene verläuft.

Derartige Vorrichtungen werden auch als Scanner bezeichnet und finden zum Beispiel in Scanning-Mikroskopen Verwendung, um eine zu untersuchende Probe mit dem Lichtstrahl abzutasten, der nach dem Scanner mit einem Objektiv fokussiert wird. Wenn der Liststrahl ein Laserstrahl ist, spricht man dann auch von Laserscanning-Mikroskopen.

### STAND DER TECHNIK

Eine Vorrichtung zum Verlagern eines auf einer optischen Achse einfallenden Lichtstrahls, die die eingangs angeführten Merkmale des Oberbegriffs des Patentanspruchs 1 aufweist, ist aus der DE 103 39 134 A1 bekannt. Hierbei handelt es sich um eine Strahlablenkeinrichtung in einem Scanning-Mikroskop mit zwei Strahlkippeinheiten. Jede der beiden Strahlkippeinheiten lenkt den Lichtstrahl um eine Achse ab, die nicht mit einer optischen Achse des einfallenden Lichtstrahls zusammenfällt. Die Strahlkippeinheiten sind derart ausgelegt, dass der abgelenkte Lichtstrahl nach der Strahlablenkeinrichtung unter unterschiedlichen Winkeln durch einen als Austrittspupille der Strahlablenkeinrichtung bezeichneten ortsfesten Punkt hindurchtritt. Konkret lenkt die eine Strahlkippeinheit den Lichtstrahl in Bezug auf die optische Achse in x-Richtung und die andere Strahlkippeinheit den Lichtstrahl in Bezug auf die optische Achse in y-Richtung ab. Dazu weist jede der Strahlkippeinheiten jeweils zwei um parallele Schwenkachsen schwenkende, hintereinander angeordnete Drehspiegel auf. Der als Austrittspupille der Strahlablenkeinrichtung bezeichnete ortsfeste Punkt ist durch Veränderung der Kippwinkel der einzelnen Drehspiegel entlang der optischen Achse des abgelenkten Lichtstrahls variabel gegenüber der Strahlablenkeinrichtung festlegbar. Diese optische Achse des abgelenkten Lichtstrahls ist gegenüber der optischen Achse des einfallenden Lichtstrahls in der x-Richtung und in der y-Richtung versetzt, und zwar um den Abstand der Schwenkachsen der beiden Drehspiegel der jeweiligen Strahlkippeinheit in der x-Richtung bzw. der y-Richtung.

Eine weitere Vorrichtung zum Verlagern eines auf einer optischen Achse einfallenden Lichtstrahls, die die eingangs angeführten Merkmale des Oberbegriffs des unabhängigen Patentanspruchs 1 aufweist, ist aus der WO 2010/069987 A1 bekannt. Die Vorrichtung dient zur dynamischen Verlagerung des Lichtstrahls gegenüber einer den Lichtstrahl fokussierenden, eine Pupille aufweisende Optik, um mit dem fokussierten Lichtstrahl ein Objekt in einem zweidimensionalen Abtastbereich abzutasten. Dazu lenken Strahlablenkungsmittel den Lichtstrahl gegenüber der optischen Achse der Optik in zwei verschiedenen Richtungen um dynamisch veränderbare Ablenkwinkel ab. Je Richtung sind mindestens zwei Strahlablenkungsmittel hintereinander geschaltet, die den Lichtstrahl um zwei unabhängig voneinander dynamisch veränderbare Ablenkwinkel ablenken. Eine Steuerung für die Strahlablenkungsmittel legt die vier Ablenkwinkel für jeden Punkt des Abtastbereichs so fest, dass der Lichtstrahl immer an derselben Stelle durch die Pupille der Optik verläuft und der Abtastbereich mit dem fokussierten Lichtstrahl in einem vorgegebenen Muster abgetastet wird. Die Strahlablenkungsmittel umfassen Drehspiegel, die um eine in ihrer Spiegelfläche oder parallel dazu verlaufende Schwenkachse verschwenkbar sind. Auch bei dieser bekannten Vorrichtung weist die optische Achse des einfallenden Lichtstrahls gegenüber der optischen Achse des mit den Strahlablenkungsmitteln abgelenkten Lichtstrahls, d. h. der optischen Achse der fokussierenden Optik einen Versatz in beiden Richtungen auf, in denen der Lichtstrahl abgelenkt wird und dessen Betrag gleich dem Abstand der Schwenkachsen der Drehspiegel in der jeweiligen Richtung ist.
Weiterer Stand der Technik wird in US2014/092459 A1 und US2006/151449 A1 beschrieben.

### AUFGABE DER ERFINDUNG

Der Erfindung liegt die Aufgabe zugrunde, eine Vorrichtung zum Verlagern eines auf einer optischen Achse einfallenden Lichtstrahls mit vier Drehspiegeln, die den Lichtstrahl nacheinander durch Reflektion an ihren Spiegelflächen ablenken, aufzuzeigen, bei der der von allen vier Drehspiegeln abgelenkte Lichtstrahl bei einer minimalen Anzahl von Reflektionen an Spiegelflächen keinen permanenten seitlichen Versatz zu der optischen Achse aufweist, auf der er einfällt.

### LÖSUNG

Die Aufgabe der Erfindung wird durch eine Vorrichtung mit den Merkmalen des unabhängigen Patentanspruchs 1 gelöst. Die abhängigen Patentansprüche 2 bis 13 betreffen bevorzugte Ausführungsformen der erfindungsgemäßen Vorrichtung. Die Patentansprüche 14 und 15 definieren bevorzugte optische Aufbauten mit der erfindungsgemäßen Vorrichtung.

### BESCHREIBUNG DER ERFINDUNG

Im Folgenden werden die Formulierungen "der eine der vier Drehspiegel", "der andere der vier Drehspiegel", "der weitere der vier Drehspiegel" und "der übrige der vier Drehspiegel" und deren Kurzfassungen "der eine Drehspiegel", "der andere Drehspiegel", "der weitere Drehspiegel" und "der übrige Drehspiegel" synonym verwendet.

Die vorliegende Erfindung übernimmt von den Merkmalen der aus der DE 103 39 134 A1 und der WO 2010/069987 A1 bekannten Vorrichtungen nur die folgenden: Die Vorrichtung weist vier Drehspiegel auf, die den Lichtstrahl nacheinander durch Reflektion an ihren Spiegelflächen ablenken. Einer der vier Drehspiegel ist um eine parallel zu seiner Spiegelfläche und orthogonal zu der optischen Achse verlaufende erste Schwenkachse verschwenkbar. Ein anderer der vier Drehspiegel ist um eine parallel zu seiner Spiegelfläche und parallel zu der ersten Schwenkachse verlaufende zweite Schwenkachse verschwenkbar. Ein weiterer der vier Drehspiegel ist um eine parallel zu seiner Spiegelfläche verlaufende dritte Schwenkachse verschwenkbar; und ein übriger der vier Drehspiegel ist um eine parallel zu seiner Spiegelfläche verlaufende vierte Schwenkachse verschwenkbar, die zusammen mit der dritten Schwenkachse in einer Ebene verläuft.

Die zuletzt genannte Ebene, in der die dritte und die vierte Schwenkachse des weiteren und des übrigen Drehspiegels verlaufen, ist aber bereits grundsätzlich anders ausgerichtet als bei den bekannten Vorrichtungen. Dort verläuft diese Ebene orthogonal oder zumindest quer, d. h. annähernd orthogonal, zu der optischen Achse des einfallenden und der dazu versetzten optischen Achse des abgelenkten Lichtstrahls. Bei der erfindungsgemäßen Vorrichtung verläuft diese Ebene hingegen orthogonal zu der ersten Schwenkachse, die ihrerseits orthogonal zu der optischen Achse des einfallenden Lichtstrahls verläuft. Dies ist gleichbedeutend damit, dass die Ebene parallel zu dieser optischen Achse verläuft.

Weiterhin verläuft die dritte Schwenkachse bei der erfindungsgemäßen Vorrichtung nicht orthogonal, sondern unter einem spitzen Winkel von nicht mehr als 80° zu der optischen Achse. Dies hat zusammen mit der Orientierung der Ebene orthogonal zu der ersten Schwenkachse zur Folge, dass das Verschwenken des weiteren und des übrigen Drehspiegels den Lichtstrahl sowohl in Richtung der ersten Schwenkachse gegenüber der Ebene als auch längs der Ebene verlagert. Das heißt, der übrige und der weitere Drehspiegel bilden keine Strahlkippeinheit, die den Lichtstrahl nur in Richtung der ersten Schwenkachse verlagert, sondern sie verlagert den Lichtstrahl auch längs der orthogonal zu der ersten Schwenkachse verlaufenden Ebene. Diese Ablenkungskomponente längs der Ebene kann jedoch beim Verschwenken des einen und des anderen Drehspiegels, das primär dem Verlagern des Lichtstrahls um die erste Schwenkachse, d. h. längs der Ebene, dient, kompensiert werden.

Zugleich sind die Orientierung der Ebene, in der die dritte und die vierte Schwenkachse verlaufen, orthogonal zu der ersten Schwenkachse und der spitze Winkel der vierten Schwenkachse zu der optischen Achse, die diese Kompensation erforderlich machen, bei der erfindungsgemäßen Vorrichtung aber Grundlage dafür, dass bereits der von allen vier Drehspiegeln abgelenkte Lichtstrahl in einer Schwenkstellung der vier Drehspiegel um ihre vier Schwenkachsen wieder auf der optischen Achse verläuft, d. h. ohne dass auch nur ein zusätzlicher Spiegel oder gar ein zusätzliches Spiegelpaar benötigt wird, um einen Winkel oder einen Versatz zwischen der optischen Achse des einfallenden Lichtstrahls und einer hiervon abweichenden optischen Achse des von den vier Drehspiegeln abgelenkten Lichtstrahls zu kompensieren.

Mit anderen Worten realisiert die erfindungsgemäße Vorrichtung mit nur vier Drehspiegeln einen Online-Scanner, der zwar den abgelenkten Lichtstrahl gegenüber dem einfallenden Lichtstrahl wunschgemäß verkippt und/oder verlagert, aber keinen zusätzlichen Versatz einführt.

Vorzugsweise ist die eine Schwenkstellung der vier Drehspiegel um ihre vier Schwenkachsen, in der der abgelenkte Lichtstrahl wieder auf der optischen Achse verläuft, eine mittlere Schwenkstellung, die das weitere Verschwenken aller Drehspiegel in beiden Richtungen um ihre jeweilige Schwenkachse zulässt.

Bei der erfindungsgemäßen Vorrichtung verläuft die optische Achse des einfallenden und abgelenkten Lichtstrahls insbesondere in derselben Ebene wie die dritte und die vierte Schwenkachse. Dies bedeutet auch, dass die optische Achse des Lichtstrahls in der einen Schwenkstellung der vier Drehspiegel um ihre vier Schwenkachsen, in der der abgelenkte Lichtstrahl wieder auf der optischen Achse verläuft, diese Ebene bei keiner seiner Ablenkungen durch einen der Drehspiegel verlässt. Dennoch kann der Lichtstrahl aufgrund der geneigten Anordnung der vierten Schwenkachse zu der optischen Achse durch koordiniertes Verschwenken der vier Drehspiegel der erfindungsgemäßen Vorrichtung sowohl um die erste Schwenkachse als auch in Richtung der ersten Schwenkachse um jeweils einstellbare Maße abgelenkt werden. In den aus der DE 103 39 134 A1 und der WO 2010/069987 A1 bekannten Vorrichtungen weist der Lichtstrahl hingegen in jeder Schwenkstellung der Drehspiegel nicht nur einen zweidimensionalen Verlauf in einer Ebene, sondern einen dreidimensionale Verlauf mit nicht kompensierbaren seitlichen Versätzen zu der optischen Achse sowohl in Richtung der ersten Schwenkachse als auch senkrecht dazu auf.

Weiterhin kann der Lichtstrahl bei der erfindungsgemäßen Vorrichtung in der einen Schwenkstellung der vier Drehspiegel, in der der von den vier Drehspiegeln abgelenkte Lichtstrahl wieder längs der optischen Achse des einfallenden Lichtstrahls verläuft, nach dem Ablenken durch die ersten beiden der vier Drehspiegel und vor dem Ablenken durch die nächsten beiden der vier Drehspiegel parallel zu der optischen Achse und in der Ebene verlaufen, in der auch die dritte und die vierte Schwenkachse verlaufen.

Konkret kann die vierte Schwenkachse unter einem spitzen Winkel von 45° bis 75° oder von 50° bis 70°, d. h. von etwa 60° zu der optischen Achse verlaufen.

Auch die dritte Schwenkachse verläuft bei der erfindungsgemäßen Vorrichtung unter einem spitzen Winkel von nicht mehr als 80° zu der optischen Achse, wobei dieser spitze Winkel ebenfalls 45° bis 75° oder 50° bis 70°, d. h. etwa 60° betragen kann.

Die Reihenfolge der vier Drehspiegel in Bezug auf den einfallenden Laserstrahl ist bei der erfindungsgemäßen Vorrichtung nicht durch die hier gewählte Bezeichnung Ihrer Schwenkachsen als erste bis vierte Schwenkachse festgelegt. In einer Ausführungsform der erfindungsgemäßen Vorrichtung lenken aber der eine der vier Drehspiegel und der übrige der vier Drehspiegel den Lichtstrahl jeweils als erster oder als letzter der vier Drehspiegel ab. Dann trifft der Lichtstrahl als erstes auf den einen oder den übrigen der vier Drehspiegel mit der ersten oder der vierten Schwenkachse und als letztes auf den übrigen oder einen der vier Drehspiegel mit der vierten oder ersten Schwenkachse.

Der weitere und der übrige Drehspiegel können bei der erfindungsgemäßen Vorrichtung direkt aufeinander folgen, d. h. den Lichtstrahl direkt nacheinander ablenken. In diesem Fall ist es günstig, wenn die dritte Schwenkachse parallel zu der vierten Schwenkachse verläuft.

Es ist aber auch möglich, dass der andere Drehspiegel zwischen dem weiteren und dem übrigen Drehspiegel angeordnet ist, d. h. den Lichtstrahl dazwischen ablenkt. In dieser Ausführungsform der erfindungsgemäßen Vorrichtung, in der es keine getrennten Strahlkippeinheiten für das Ablenken des Lichtstrahls in Richtung der ersten Schwenkachse und orthogonal dazu gibt, weil auch das Verschwenken des einen und des anderen Drehspiegels den Lichtstrahl sowohl orthogonal zu als auch in Richtung der ersten Schwenkachse verlagert, verläuft die dritte Schwenkachse allgemein unter einem stumpfen Winkel von 90° bis 160° und typischerweise von etwa 120° zu der vierten Schwenkachse. Bei dieser Ausführungsform der erfindungsgemäßen Vorrichtung weisen also der weitere und der übrige Drehspiegel keine parallelen Schwenkachsen auf, wie dies im Stand der Technik auch für das zweite Paar der Drehspiegel allgemein üblich ist. Hiermit wird erreicht, dass ein Antrieb für den weiteren Drehspiegel, wenn dieser den Lichtstrahl als dritter Drehspiegel ablenkt, nach oben von einer nachgeschalteten Optik weg abgeschwenkt werden kann, so dass der Abstand der erfindungsgemäßen Vorrichtung zu der nachgeschalteten Optik minimiert werden kann. Darüber hinaus sind die Abstände zwischen dem einen und dem anderen sowie zwischen dem weiteren und dem übrigen Drehspiegel vergrößert. Diese größere Abständen haben größere Ablenkungen des abgelenkten Lichtstrahls gegenüber der optischen Achse des einfallenden Lichtstrahls und damit eine größere Abtastgeschwindigkeit zur Folge. So wird bei begrenzter Schwenkgeschwindigkeit der Drehspiegel eine höhere maximale Abtastgeschwindigkeit realisierbar.

Eine Steuereinrichtung der erfindungsgemäßen Vorrichtung kann das Verschwenken der vier Drehspiegel derart koordinieren, dass der abgelenkte Lichtstrahl gegenüber dem einfallenden Lichtstrahl parallel verschoben wird. Alternativ dazu oder damit überlagert kann die Koordination des Verschwenkens der vier Drehspiegel so erfolgen, dass der abgelenkte Lichtstrahl gegenüber dem einfallenden Lichtstrahl um einen festen Punkt gekippt wird. Dieser feste Punkt liegt vorzugsweise auf der optischen Achse. Konkret kann er zwischen dem ersten und dem letzten der vier Drehspiegel auf der optischen Achse liegen. Bevorzugt liegt er zwischen dem zweiten und dem dritten der vier Drehspiegel.

Bei einem erfindungsgemäßen optischen Aufbau mit einer Lichtquelle, die einen Lichtstrahl auf einer optischen Achse abstrahlt, einer erfindungsgemäßen Vorrichtung zum Verlagern des Lichtstrahls und eine den Lichtstrahl fokussierenden Optik verlagert die Steuerung der erfindungsgemäßen Vorrichtung den fokussierten Lichtstrahl unabhängig voneinander in zwei linearen Richtungen, die orthogonal zueinander und zu der optischen Achse verlaufen. Vorzugsweise handelt es sich dabei um die linearen Richtungen parallel zu der ersten Schwenkachse und orthogonal dazu. Es versteht sich, dass bei der erfindungsgemäßen Vorrichtung das Verlagern des Lichtstrahls in Richtung der ersten Schwenkachse immer bedeutet, dass dabei alle vier Drehspiegel um ihre Schwenkachsen verschwenkt werden, um die mit dem weiteren und dem übrigen der Drehspiegel eingeführte Verlagerung in Richtung orthogonal zu der ersten Schwenkachse mit dem einen und dem anderen Drehspiegel zu kompensieren.

Vorzugsweise ist die Steuerung bei dem optischen Aufbau so ausgebildet, dass sie den fokussierten Lichtstrahl in äquidistanten Schritten längs der beiden linearen Richtungen verlagert. So kann in einem Scanning-Mikroskop, das den erfindungsgemäßen optischen Aufbau umfasst, die jeweilige Probe in diesen äquidistanten Schritten abgetastet werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform der erfindungsgemäßen Vorrichtung in einer perspektivischen Ansicht innerhalb eines Koordinatensystems x, y, z.
- **Fig. 2**: zeigt ist eine Ansicht der Vorrichtung gemäß Fig. 1 mit Blickrichtung in Richtung der y-Koordinate des Koordinatensystems.
- **Fig. 3**: zeigt die Verlagerung eines Lichtstrahls mit der Vorrichtung gemäß den Fig.1 und 2 in der x-y-Ebene des Koordinatensystems.
- **Fig. 4**: zeigt die Verlagerung des Lichtstrahls mit der Vorrichtung gemäß den Fig.1 und 2 bei anderer Ansteuerung der Vorrichtung als in Fig. 3.
- **Fig. 5**: zeigt einen optischen Aufbau mit der Vorrichtung gemäß den Fig. 1 und 2 mit Blickrichtung längs der x-Koordinate des Koordinatensystems.
- **Fig. 6**: ist eine Fig. 1 entsprechende perspektivische Ansicht einer zweiten Ausführungsform der erfindungsgemäßen Vorrichtung.
- **Fig. 7**: ist eine Fig. 2 entsprechende zweite Ansicht der Vorrichtung gemäß Fig.6.
- **Fig. 8**: zeigt die Verlagerung eines Lichtstrahls mit der Vorrichtung gemäß den Fig. 6 und 7; und
- **Fig. 9**: zeigt einen optischen Aufbau mit der Vorrichtung gemäß den Fig. 6 und 7.

### FIGURENBESCHREIBUNG

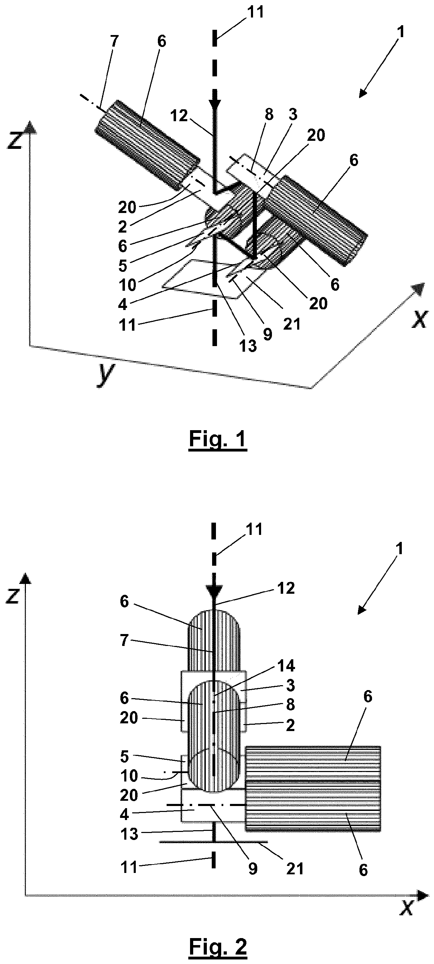

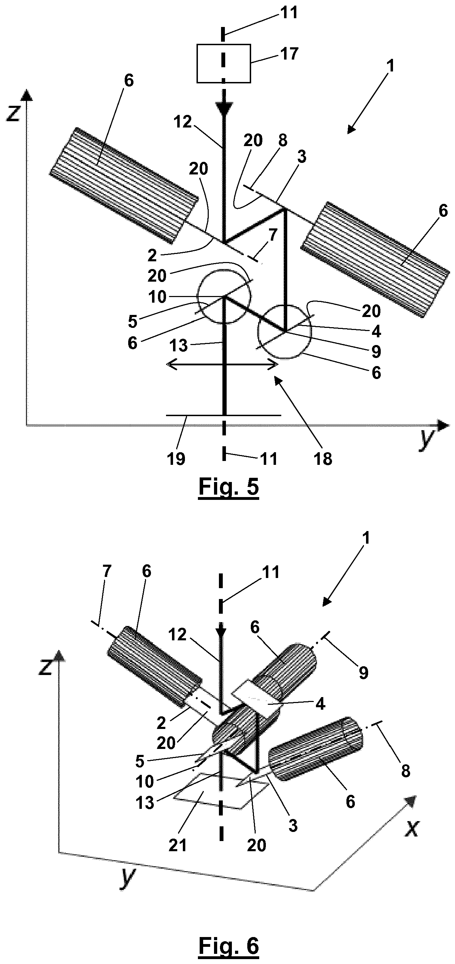

Die in den **Fig. 1 und 2** dargestellte Vorrichtung 1 weist vier Drehspiegel 2 bis 5 auf, die jeweils mit einem Antrieb 6 versehen sind, um sie jeweils um eine Schwenkachse 7 bis 10 zu verschwenken. Dieses Verschwenken dient der Verlagerung eines längs einer optischen Achse 11 einfallenden Lichtstrahls 12 gegenüber einer Projektionsfläche 21, wobei der von den vier Drehspiegeln 2 bis 5 abgelenkte Lichtstrahl 13 zumindest in einer Drehstellung der Drehspiegel 2 bis 5 wieder genau auf der optischen Achse 11 liegt. Erreicht wird dies durch eine gegenüber anderen Vorrichtungen zum Verlagern eines Lichtstrahls mit vier Drehspiegeln 2 bis 5 ungewöhnliche Anordnung der Schwenkachsen 7 bis 10. Zwar verläuft die Schwenkachse 10 des Drehspiegels 5 orthogonal zu der optischen Achse 11 in x-Richtung, und die Schwenkachse 9 des Drehspiegels 4 verläuft parallel zu der Schwenkachse 5, d. h. ebenfalls in x-Richtung. Die Schwenkachsen 7 und 8 der Drehspiegel 2 und 3 verlaufen aber nicht in y-Richtung. Vielmehr weist der Verlauf der Schwenkachsen 7 und 8 neben einer Komponente in y-Richtung jeweils auch eine Komponente in z-Richtung auf. Dies geht auch aus Fig. 5 hervor. Dabei verlaufen die Schwenkachsen 7 und 8 in einer gemeinsamen Ebene 14, die der Zeichenebene von Fig. 5 entspricht. Der einfallende Lichtstrahl 12 wird hier zunächst von dem um die Schwenkachse 7 verschwenkbaren Drehspiegel 2 durch Reflektion an seiner Spiegelfläche 20 abgelenkt. Direkt danach erfolgt eine Reflektion des Lichtstrahls 12 an der Spiegelfläche 20 des Drehspiegels 3, dessen Schwenkachse 8 parallel zu der Schwenkachse 7 verläuft. Danach verläuft der Lichtstrahl 12 zumindest in der Stellung der Drehspiegel 2 bis 5, in der der abgelenkte Lichtstrahl 13 genau auf die optische Achse 11 fällt, parallel zu der optischen Achse 11. Aus dem Parallelverlauf wird er von dem Drehspiegel 4 abgelenkt, bevor der Drehspiegel 5 den abgelenkten Lichtstrahl 13 auf die optische Achse 11 ausrichtet. In der Stellung der Drehspiegel 2 bis 5, in der der abgelenkte Lichtstrahl 13 genau auf die optische Achse 11 fällt, verläuft der Lichtstrahl 12, 13 immer in der Ebene 14, in der auch die Drehachsen 7 und 8 der Drehspiegel 2 und 3 verlaufen. Der Lichtstrahl 12, 13 kann auch in umgekehrter Richtung durch die Vorrichtung 1 verlaufen, d. h. zuerst durch den Drehspiegel 5 und zuletzt durch den Drehspiegel 2 abgelenkt werden.

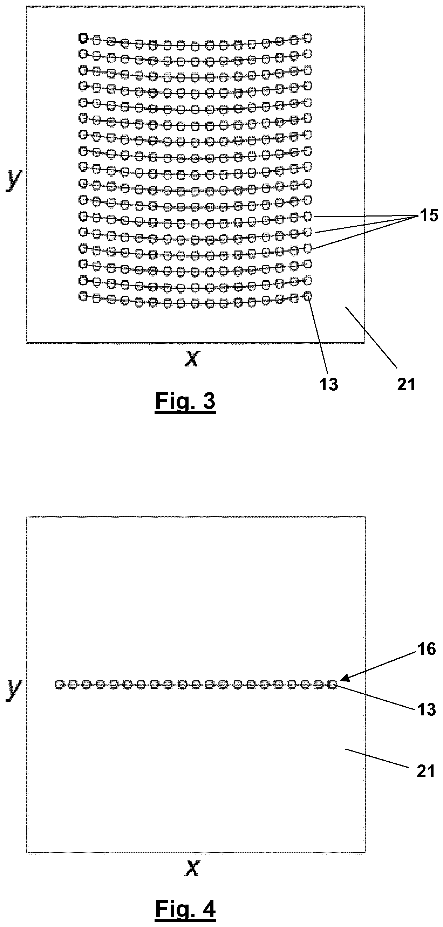

**Fig. 3** zeigt die Verlagerung des abgelenkten Lichtstrahls 13 gegenüber der Projektionsfläche 21, wobei die Verlagerung in mehreren Zeilen 15 dargestellt ist. Längs jeder dieser Zeilen 15 wird der abgelenkte Lichtstrahl 13 ausschließlich mit Hilfe der Drehspiegel 2 und 3 verlagert. Durch die Orientierung der Schwenkachsen 7 und 8 der Drehspiegel 2 und 3 sind die Zeilen 15 gekrümmt, d. h. der abgelenkte Lichtstrahl 13 wird längs jeder Zeile 15 zwar überwiegend in x-Richtung aber auch in y-Richtung verlagert. Zwischen den einzelnen Zeilen 15 wird der abgelenkte Lichtstrahl 13 nur mit Hilfe der Drehspiegel 4 und 5 verlagert. Diese Verlagerung erfolgt ausschließlich in y-Richtung. Durch koordinierte Ansteuerung der Drehspiegel kann der abgelenkte Lichtstrahl 13 aber auch exakt in y-Richtung abgelenkt werden, wie dies für eine Zeile 16 in **Fig. 4** gezeigt ist. Dabei wird mit den Drehspiegeln 4 und 5 die Ablenkung des Lichtstrahls 13 in y-Richtung kompensiert, die bei seiner Ablenkung mit den Drehspiegeln 2 und 3 immer zusätzlich zu seiner Ablenkung in x-Richtung erfolgt.

Der optische Aufbau gemäß **Fig. 5** zeigt zusätzlich eine Lichtquelle 17, die den Lichtstrahl 12 auf der optischen Achse 11 bereitstellt und eine den abgelenkten Lichtstrahl 13 fokussierende Optik 18. Mit Hilfe der Vorrichtung 1 kann der abgelenkte Lichtstrahl 13, bei dem es sich typischerweise um einen Laserstrahl handelt, so gegenüber der optischen Achse parallel verschoben und/oder verkippt werden, dass der fokussierte Lichtstrahl 13 in zwei linearen Richtungen in äquidistanten Schritten in einer Probe 19 verlagert wird.

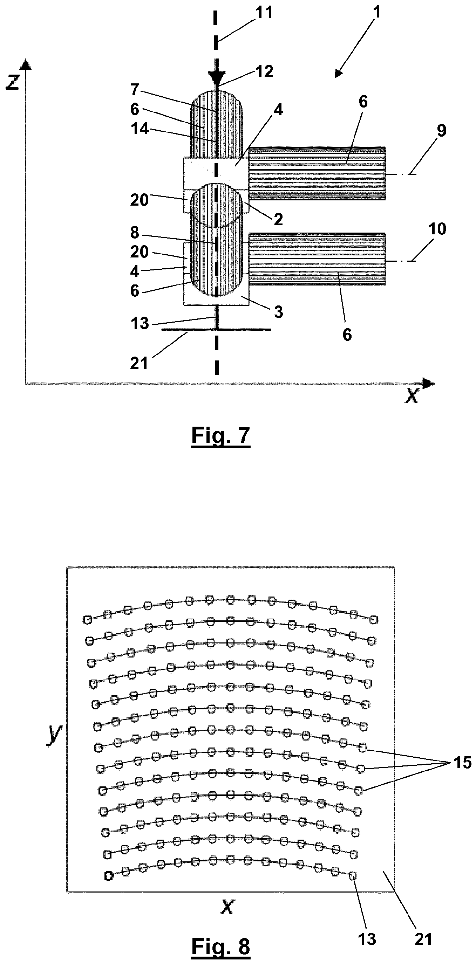

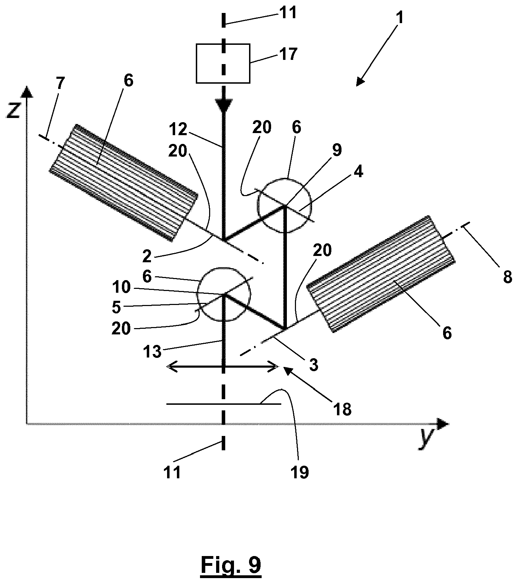

Bei der Ausführungsform der erfindungsgemäßen Vorrichtung 1, die in den **Fig. 6** **und** **7** gezeigt ist, ist gegenüber der Ausführungsform gemäß den Fig. 1 und 2 die Reihenfolge der Drehspiegel 3 und 4 vertauscht. Das heißt, nach dem Drehspiegel 2 mit der zu der optischen Achse 11 geneigten Schwenkachse 7 trifft der Lichtstrahl 12 auf den Drehspiegel 4 mit der Schwenkachse 9, die parallel zu der Schwenkachse 10 verläuft, welche orthogonal zu der optischen Achse 11 ausgerichtet ist. Erst danach trifft er auf den Drehspiegel 3, dessen Schwenkachse 8 in derselben Ebene 14 wie die Schwenkachse 7 des Drehspiegels 2 verläuft. Dabei sind die Schwenkachsen 7 und 8 nicht parallel, sondern sie verlaufen unter einem stumpfen Winkel von hier etwa 120°. Entsprechend liegt der Antrieb 6 in z-Richtung höher als bei der Ausführungsform gemäß den Fig. 1 und 2. Dies hat bei dem optischen Aufbau gemäß **Fig. 9** zur Folge, dass die Gefahr einer Kollision zwischen der Vorrichtung 1 und der Optik 18 reduziert ist. Dabei ist zu berücksichtigen, dass Fig. 9 ebenso wie Fig. 5 die Größenverhältnisse in dem optischen Aufbau nicht korrekt wiedergibt. Die Antriebe 6 und die Optik 18 weisen typischerweise sehr viel größere Abmessungen im Vergleich zu den Drehspiegeln 2 bis 5 auf, als dies den Figuren 5 und 9 zu entnehmen ist. Zudem resultieren größere Abstände zwischen den Drehspiegeln 2 und 3, deren Schwenkachsen 7 und 8 in der Ebene 14 verlaufen, und zwischen den Drehspiegeln 4 und 5, deren Schwenkachsen 9 und 10 parallel zueinander verlaufen. Aus diesen größeren Abständen ergeben sich größere Ablenkungen des abgelenkten Lichtstrahls 13 gegenüber der optischen Achse 11, wenn die Drehspielgel 2 bis 5 über bestimmte Winkel um ihre Schwenkachsen 7 bis 10 verschwenkt werden. Damit wird bei begrenzter Schwenkgeschwindigkeit der Drehspiegel 2 bis 5 eine höhere Abtastgeschwindigkeit realisierbar.

Durch die andere Reihenfolge der Drehspiegel 2 bis 5 kommt es bei der Verlagerung des abgelenkten Strahls 13 durch Verschwenken der Drehspiegel 2 bis 5, wie sie in **Fig. 8** illustriert ist, nicht nur zu einer Krümmung der Zeilen 15, d. h. dazu, dass ein Verschwenken der Drehspiegel 2 und 3 um die Schwenkachsen 7 und 8 den abgelenkten Lichtstrahl 13 sowohl in x-als auch in y-Richtung verlagert, sondern auch dazu, dass ein Verschwenken der Drehspiegel 4 und 5 um die Schwenkachse 9 und 10 den abgelenkten Lichtstrahl 13 - außer in seiner mittleren x-Position - nicht nur in y-Richtung, sondern zu einem gewissen Maß auch in x-Richtung verlagert. Eine koordinierte Ansteuerung der Antriebe 6 für die Drehspiegel 2 bis 5 lässt aber auch hier das Verlagern des abgelenkten Lichtstrahls 13 längs einer geraden Zeile 16 gemäß Fig. 4 zu.

Die Drehspiegel 2 bis 5 werden in dieser Reihenfolge in der Beschreibung der Erfindung und den Patentansprüchen auch als übriger, weiterer, anderer und einer der vier Drehspiegel bezeichnet. Ihre vier Schwenkachsen 7 bis 10 werden dort als vierte, dritte, zweite und erste Schwenkachse bezeichnet.

### BEZUGSZEICHENLISTE

- 1: Vorrichtung
- 2: (übriger) Drehspiegel
- 3: (weiterer) Drehspiegel
- 4: (anderer) Drehspiegel
- 5: (einer) Drehspiegel
- 6: Antrieb
- 7: (vierte) Schwenkachse
- 8: (dritte) Schwenkachse
- 9: (zweite) Schwenkachse
- 10: (erste) Schwenkachse
- 11: optische Achse
- 12: einfallender Lichtstrahl
- 13: abgelenkter Lichtstrahl
- 14: Ebene
- 15: Zeile
- 16: Zeile
- 17: Lichtquelle
- 18: Optik
- 19: Probe
- 20: Spiegelfläche
- 21: Projektionsfläche

## Patentansprüche

1. Vorrichtung (1) zum Verlagern eines auf einer optischen Achse (11) einfallenden Lichtstrahls (12),
- mit vier Drehspiegeln (2 bis 5), die den Lichtstrahl nacheinander durch Reflektion an ihren Spiegelflächen (20) ablenken,
- wobei einer (5) der vier Drehspiegel (2 bis 5) um eine parallel zu seiner Spiegelfläche (20) und orthogonal zu der optischen Achse (11) verlaufende erste Schwenkachse (10) verschwenkbar ist,
- wobei ein anderer (4) der vier Drehspiegel (2 bis 5) um eine parallel zu seiner Spiegelfläche (20) und parallel zu der ersten Schwenkachse (10) verlaufende zweite Schwenkachse (9) verschwenkbar ist,
- wobei ein weiterer (3) der vier Drehspiegel (2 bis 5) um eine parallel zu seiner Spiegelfläche (20) verlaufende dritte Schwenkachse (8) verschwenkbar ist und
- wobei ein übriger (2) der vier Drehspiegel (2 bis 5) um eine parallel zu seiner Spiegelfläche (20) verlaufende vierte Schwenkachse (7) verschwenkbar ist, die zusammen mit der dritten Schwenkachse (8) in einer Ebene (14) verläuft,
**dadurch gekennzeichnet,**
- **dass** der von allen vier Drehspiegeln (2 bis 5) abgelenkte Lichtstrahl in einer Schwenkstellung der vier Drehspiegel (2 bis 5) um ihre vier Schwenkachsen (7 bis 10) wieder auf der optischen Achse (11) verläuft,
- wobei die Ebene (14) orthogonal zu der ersten Schwenkachse (10) verläuft,
- wobei die dritte Schwenkachse (8) unter einem spitzen Winkel von nicht mehr als 80° zu der optischen Achse (11) verläuft,
- wobei die vierte Schwenkachse (7) unter einem spitzen Winkel von nicht mehr als 80° zu der optischen Achse (11) verläuft,
- wobei das Verschwenken des weiteren (3) der vier Drehspiegel (2 bis 5) und des übrigen (2) der vier Drehspiegel (2 bis 5) den Lichtstrahl sowohl in Richtung der ersten Schwenkachse (10) gegenüber der Ebene (14) als auch längs der Ebene (14) verlagert und
- wobei das Verschwenken des einen (5) der vier Drehspiegel (2 bis 5) und des anderen (4) der vier Drehspiegel (2 bis 5) den Lichtstrahl längs der Ebene (14) verlagert.

2. Vorrichtung (1) nach Anspruch 1, **dadurch gekennzeichnet, dass** die optische Achse (11) in der Ebene (14) verläuft.

3. Vorrichtung (1) nach einem der vorhergehenden Ansprüche, **dadurch gekennzeichnet, dass** der Lichtstrahl in der einen Schwenkstellung der vier Drehspiegel (2 bis 5) nach dem Ablenken durch die ersten beiden der vier Drehspiegel (2 bis 5) und vor dem Ablenken durch die nächsten beiden der vier Drehspiegel (2 bis 5) parallel zu der optischen Achse (11) in der Ebene (14) verläuft.

4. Vorrichtung (1) nach einem der vorhergehenden Ansprüche, **dadurch gekennzeichnet, dass** die vierte Schwenkachse (7) unter einem spitzen Winkel von 45° bis 75° oder von 50° bis 70° zu der optischen Achse (11) verläuft.

5. Vorrichtung (1) nach einem der vorhergehenden Ansprüche, **dadurch gekennzeichnet, dass** die dritte Schwenkachse (8) unter einem spitzen Winkel von 45° bis 75° zu der optischen Achse (11) verläuft.

6. Vorrichtung (1) nach Anspruch 5, **dadurch gekennzeichnet, dass** die dritte Schwenkachse (8) unter einem spitzen Winkel von 50° bis 70° zu der optischen Achse (11) verläuft.

7. Vorrichtung (1) nach einem der vorhergehenden Ansprüche, **dadurch gekennzeichnet, dass** der eine (5) der vier Drehspiegel (2 bis 5) und der übrige (2) der vier Drehspiegel (2 bis 5) den Lichtstrahl jeweils als erster oder als letzter der vier Drehspiegel (2 bis 5) ablenken.

8. Vorrichtung (1) nach einem der vorhergehenden Ansprüche, **dadurch gekennzeichnet, dass** der weitere (3) der vier Drehspiegel (2 bis 5) und der übrige (2) der vier Drehspiegel (2 bis 5) den Lichtstrahl direkt nacheinander ablenken und dass die dritte Schwenkachse (8) parallel zu der vierten Schwenkachse (7) verläuft.

9. Vorrichtung (1) nach einem der Ansprüche 1 bis 7, **dadurch gekennzeichnet, dass** der andere (4) der vier Drehspiegel (2 bis 5) den Lichtstrahl zwischen dem weiteren (3) der vier Drehspiegel (2 bis 5) und dem übrigem (2) der vier Drehspiegel (2 bis 5) ablenkt und dass die dritte Schwenkachse (8) unter einem stumpfen Winkel von 90° bis 160° zu der vierten Schwenkachse (7) verläuft.

10. Vorrichtung (1) nach einem der vorhergehenden Ansprüche, **dadurch gekennzeichnet, dass** eine Steuereinrichtung das Verschwenken der vier Drehspiegel (2 bis 5) derart koordiniert, dass der abgelenkte Lichtstrahl (13) gegenüber dem einfallenden Lichtstrahl (12) parallel verschoben wird.

11. Vorrichtung (1) nach einem der Ansprüche 1 bis 9, **dadurch gekennzeichnet, dass** eine Steuereinrichtung das Verschwenken der vier Drehspiegel (2 bis 5) derart koordiniert, dass der abgelenkte Lichtstrahl (13) gegenüber dem einfallenden Lichtstrahl (12) um einen festen Punkt gekippt wird.

12. Vorrichtung (1) nach Anspruch 11, **dadurch gekennzeichnet, dass** der feste Punkt auf der optischen Achse (11) liegt.

13. Vorrichtung (1) nach Anspruch 12, **dadurch gekennzeichnet, dass** der feste Punkt zwischen dem ersten und dem letzten der vier Drehspiegel (2 bis 5) auf der optischen Achse (11) liegt.

14. Optischer Aufbau mit einer Lichtquelle (17), die einen Lichtstrahl auf einer optischen Achse (11) abstrahlt, einer Vorrichtung (1) zum Verlagern des Lichtstrahls nach einem der Ansprüche 9 bis 13 und einer den Lichtstrahl fokussierenden Optik (18), **dadurch gekennzeichnet, dass** die Steuerung den fokussierten Lichtstrahl unabhängig voneinander in zwei linearen Richtungen verlagert, die orthogonal zueinander und zu der optischen Achse (11) verlaufen.

15. Optischer Aufbau nach Anspruch 14, **dadurch gekennzeichnet, dass** die Steuerung den fokussierten Lichtstrahl in äquidistanten Schritten längs der beiden linearen Richtungen verlagert.

## Claims

1. Device (1) for diverting a light beam (12) incoming on an optical axis (11),
- comprising four rotating mirrors (2 to 5) which, one after the other, deviate the light beam by reflection at their mirror surfaces (20),
- wherein one (5) of the four rotating mirrors (2 to 5) can be swivelled about a first swivel axis (10) running parallel to its mirror surface (20) and orthogonal to the optical axis (11),
- wherein another (4) of the four rotating mirrors (2 to 5) can be swivelled about a second swivel axis (9) running parallel to its mirror surface (20) and parallel to the first swivel axis (10),
- wherein a further (3) of the four rotating mirrors (2 to 5) can be swivelled about a third swivel axis (8) running parallel to its mirror surface (20), and
- wherein a remaining (2) of the four rotating mirrors (2 to 5) can be swivelled about a fourth swivel axis (7) running parallel to its mirror surface (20), which together with the third swivel axis (8) runs within one plane (14),
**characterised in,**
- **that**, in one swivel position of the four rotating mirrors (2 to 5) about their four swivel axis (7 to 10), the light beam deviated by all four rotating mirrors (2 to 5) runs on the optical axis (11) again,
- wherein the plane (14) runs orthogonal to the first swivel axis (10),
- wherein the third swivel axis (8) runs at an acute angle of not more than 80° with regard to the optical axis (11),
- wherein the fourth swivel axis (7) runs at an acute angle of not more than 80° with regard to the optical axis (11),
- wherein swivelling of the further (3) of the four rotating mirrors (2 to 5) and the remaining (2) of the four rotating mirrors (2 to 5) diverts the light beam both in direction of the first swivel axis (10) with regard to the plane (14) and along the plane (14), and
- wherein the swivelling of the one (5) of the four rotating mirrors (2 to 5) and the other (4) of the four rotating mirrors (2 to 5) diverts the light beam along the plane (14).

2. Device (1) of claim 1, **characterised in that** the optical axis (11) runs within the plane (14).

3. Device (1) of any of the preceding claims, **characterised in that**, in the one swivel position of the four rotating mirrors (2 to 5), the light beam, after the deviation by the first two of the four rotating mirrors (2 to 5) and prior to the deviation by the next two of the four rotating mirrors (2 to 5), runs parallel to the optical axis (11) within the plane (14).

4. Device (1) of any of the preceding claims, **characterised in that** the fourth swivel axis (7) runs at an acute angle of 45° to 75° or of 50° to 70° with regard to the optical axis (11).

5. Device (1) of any of the preceding claims, **characterised in that** the third swivel axis (8) runs at an acute angle of 45° to 75° with regard to the optical axis (11).

6. Device (1) of claim 5, **characterised in that** the third swivel axis (8) runs at an acute angle of 50° to 70° with regard to the optical axis (11).

7. Device (1) of any of the preceding claims, **characterised in that** the one (5) of the four rotating mirrors (2 to 5) and the remaining (2) of the four rotating mirrors (2 to 5) each deviate the light beam as a first or a last one of the four rotating mirrors (2 to 5).

8. Device (1) of any of the preceding claims, **characterised in that** the further (3) of the four rotating mirrors (2 to 5) and the remaining (2) of the four rotating mirrors deviate the light beam directly one after other, and that the third swivel axis (8) runs parallel to the fourth swivel axis (7).

9. Device (1) of any of the claims 1 to 7, **characterised in that** the other (4) of the four rotating mirrors (2 to 5) deviates the light beam between the further (3) of the four rotating mirrors (2 to 5) and the remaining (2) of the four rotating mirrors (2 to 5), and that the fourth swivel axis (8) runs at an obtuse angle of 90° to 160° with regard to the fourth swivel axis (7).

10. Device (1) of any of the preceding claims, **characterised in that** a controller coordinates the swivelling of the four rotating mirrors (2 to 5) in such a way that the deviated light beam (13) is diverted parallel to the incoming light beam (12).

11. Device (1) of any of the claims 1 to 9, **characterised in that** a controller coordinates the swivelling of the four rotating mirrors (2 to 5) in such a way that the deviated light beam (13) is tilted with regard to the incoming light beam (12) about a fixed point.

12. Device (1) of claim 11, **characterised in that** the fixed point is located on the optical axis (11).

13. Device (1) of claim 12, **characterised in that** the fixed point is located on the optical axis (11) between the first and the last of the four rotating mirrors (2 to 5).

14. Optical setup comprising a light source (17) emitting a light beam on an optical axis (11), a device (1) for diverting the light beam of any of the claims 9 to 13, and an optic (18) focusing the light beam, **characterised in that** the controller diverts the focussed light beam independently in two linear directions which are orthogonal with regard to each other and to the optical axis (11).

15. Optical setup of claim 14, **characterised in that** the controller diverts the focussed light beam in equidistant steps along the two linear directions.

## Revendications

1. Dispositif (1) pour le déplacement d'un rayon lumineux (12) arrivant sur un axe optique (11),
- avec quatre miroirs rotatifs (2 à 5) qui dévient successivement le rayon lumineux par réflexion au niveau de leurs surfaces réfléchissantes (20),
- un (5) des quatre miroirs rotatifs (2 à 5) pouvant être pivoté autour d'un premier axe de pivotement (10) s'étendant parallèlement à sa surface réfléchissante (20) et orthogonalement par rapport à l'axe optique (11),
- un autre (4) des quatre miroirs rotatifs (2 à 5) pouvant être pivoté autour d'un deuxième axe de pivotement (9) s'étendant parallèlement à sa surface réfléchissante (20) et parallèlement au premier axe de pivotement (10),
- encore un (3) des quatre miroirs rotatifs (2 à 5) pouvant être pivoté autour d'un troisième axe de pivotement (8) s'étendant parallèlement à sa surface réfléchissante (20) et
- un restant (2) des quatre miroirs rotatifs (2 à 5) pouvant être pivoté autour d'un quatrième axe de pivotement (7) s'étendant parallèlement à sa surface réfléchissante (20), qui forme, conjointement avec le troisième axe de pivotement (8), un plan (14),
**caractérisé en ce que**
- le rayon lumineux dévié par les quatre miroirs rotatifs (2 à 5) s'étend, dans une position de pivotement des quatre miroirs rotatifs (2 à 5) autour de leurs quatre axes de pivotement (7 à 10), à nouveau sur l'axe optique (11),
- le plan (14) s'étendant de manière orthogonale par rapport au premier axe de pivotement (10),
- le troisième axe de pivotement (8) formant avec l'axe optique (11) un angle aigu non supérieur à 80°,
- le quatrième axe de pivotement (7) formant avec l'axe optique (11) un angle aigu non supérieur à 80°,
- le pivotement de l'encore un (3) des quatre miroirs rotatifs (2 à 5) et du restant (2) des quatre miroirs rotatifs (2 à 5) déplaçant le rayon lumineux aussi bien dans la direction du premier axe de pivotement (10) par rapport au plan (14) que le long du plan (14) et
- le pivotement de l'un (5) des quatre miroirs rotatifs (2 à 5) et de l'autre (4) des quatre miroirs rotatifs (2 à 5) déplaçant le rayon lumineux le long du plan (14).

2. Dispositif (1) selon la revendication 1, **caractérisé en ce que** l'axe optique (11) s'étend dans le plan (14).

3. Dispositif (1) selon l'une des revendications précédentes, **caractérisé en ce que** le rayon lumineux s'étend, dans une position de pivotement des quatre miroirs rotatifs (2 à 5) après la déviation par les deux premiers des quatre miroirs rotatifs (2 à 5) et avant la déviation par les deux autres des quatre miroirs rotatifs (2 à 5), parallèlement à l'axe optique (11) dans le plan (14).

4. Dispositif (1) selon l'une des revendications précédentes, **caractérisé en ce que** le quatrième axe de pivotement (7) forme avec l'axe optique (11) un angle aigu de 45° à 75° ou de 50° à 70°.

5. Dispositif (1) selon l'une des revendications précédentes, **caractérisé en ce que** le troisième axe de pivotement (8) forme avec l'axe optique (11) un angle aigu de 45° à 75°.

6. Dispositif (1) selon la revendication 5, **caractérisé en ce que** le troisième axe de pivotement (8) forme avec l'axe optique (11) un angle aigu de 50° à 70°.

7. Dispositif (1) selon l'une des revendications précédentes, **caractérisé en ce que** l'un (5) des quatre miroirs rotatifs (2 à 5) et le restant (2) des quatre miroirs rotatifs (2 à 5) dévient le rayon lumineux respectivement en tant que premier ou en tant que dernier des quatre miroirs rotatifs (2 à 5).

8. Dispositif (1) selon l'une des revendications précédentes, **caractérisé en ce que** l'encore un (3) des quatre miroirs rotatifs (2 à 5) et le restant (2) des quatre miroirs rotatifs (2 à 5) dévient le rayon lumineux directement l'un après l'autre et **en ce que** le troisième axe de pivotement (8) s'étend parallèlement au quatrième axe de pivotement (7).

9. Dispositif (1) selon l'une des revendications 1 à 7, **caractérisé en ce que** l'autre (4) des quatre miroirs rotatifs (2 à 5) dévie le rayon lumineux entre l'encore un (3) des quatre miroirs rotatifs (2 à 5) et le restant (2) des quatre miroirs rotatifs (2 à 5) et **en ce que** le troisième axe de pivotement (8) forme avec le quatrième axe de pivotement (7) un angle obtus de 90° à 160°.

10. Dispositif (1) selon l'une des revendications précédentes, **caractérisé en ce qu'**un dispositif de commande coordonne le pivotement des quatre miroirs rotatifs (2 à 5) de façon à ce que le rayon lumineux dévié (13) soit décalé par rapport au rayon lumineux incident (12).

11. Dispositif (1) selon l'une des revendications 1 à 9, **caractérisé en ce qu'**un dispositif de commande coordonne le pivotement des quatre miroirs rotatifs (2 à 5) de façon à ce que le rayon lumineux dévié (13) soit basculé autour d'un point fixe par rapport au rayon lumineux incident (12).

12. Dispositif (1) selon la revendication 11, **caractérisé en ce que** le point fixe se trouve sur l'axe optique (11).

13. Dispositif (1) selon la revendication 12, **caractérisé en ce que** le point fixe se trouve sur l'axe optique (11), entre le premier et le dernier des quatre miroirs rotatifs (2 à 5).

14. Structure optique avec une source de lumière (17), qui émet un rayon lumineux sur un axe optique (11), un dispositif (1) pour le déplacement du rayon lumineux selon l'une des revendications 9 à 13 et une optique (18) focalisant le rayon lumineux, **caractérisée en ce que** la commande déplace le rayon lumineux focalisé indépendamment dans directions linéaires, qui s'étendent de manière orthogonale entre elles et par rapport à l'axe optique (11).

15. Structure optique selon la revendication 14, **caractérisée en ce que** la commande déplace le rayon lumineux focalisé par pas équidistants le long des deux directions linéaires.
